(19) Europäisches Patentamt
European Patent Office
Office européen des brevets

(11) Publication number: **0 084 952**
**B1**

(12) **EUROPEAN PATENT SPECIFICATION**

(45) Date of publication of patent specification: **17.08.88**

(51) Int. Cl.[4]: **G 11 B 5/09**

(21) Application number: **83300265.2**

(22) Date of filing: **19.01.83**

(54) **Digital signal recording apparatus.**

(30) Priority: **19.01.82 JP 6328/82**
**19.01.82 JP 6329/82**

(43) Date of publication of application:
**03.08.83 Bulletin 83/31**

(45) Publication of the grant of the patent:
**17.08.88 Bulletin 88/33**

(84) Designated Contracting States:
**AT CH DE FR GB LI NL**

(58) References cited:
**US-A-3 997 876**
**US-A-4 126 887**
**IBM TECHNICAL DISCLOSURE BULLETIN, vol. 19, no. 5, October 1976, pages 1619-1620, New York, US; E.W. DEVORE: "Magnetic tape identification"**
**IBM TECHNICAL DISCLOSURE BULLETIN, vol. 18, no. 6, November 1975, pages 1987-1988, New York, US; P. HODGES et al.: "Pseudo-random recording channel"**

(73) Proprietor: **SONY CORPORATION**
**7-35 Kitashinagawa 6-Chome Shinagawa-ku**
**Tokyo 141 (JP)**

(72) Inventor: **Watanabe, Tetsu c/o Patent Division**
**Sony Corporation 7-35 Kitashinagawa-6**
**Shinagawa-ku Tokyo (JP)**
Inventor: **Tanaka, Masato c/o Patent Division**
**Sony Corporation 7-35 Kitashinagawa-6**
**Shinagawa-ku Tokyo (JP)**

(74) Representative: **Cotter, Ivan John et al**
**D. YOUNG & CO. 10 Staple Inn**
**London WC1V 7RD (GB)**

(58) References cited:
**IBM TECHNICAL DISCLOSURE BULLETIN, vol. 13, no. 1, June 1970, pages 207-208, New York, US; P. HODGES et al.: "Virtual memory method for flagging recorded information"**

**EP 0 084 952 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to digital signal recording apparatus.

In a digital tape recorder, when new data is recorded over data which has been previously recorded, or when new data is recorded in a track after the previously or first recorded data has been erased, the accumulation of dust on the tape can cause an erasing omission or recording omission so that the new data is not properly recorded. After the re-recording operation has been performed, and the dust is removed from the surface of the magnetic tape, the originally (earlier) recorded data is included with the new data on the track where the dust had previously accumulated. When the original or earlier recorded data is reproduced along with the new data, it is difficult to detect such a condition and the resulting influence upon the signal processing.

When a re-recording operation is performed with dust accumulated on the magnetic tape, a significant length of the tape, for example as much as 200μm, may not be properly recorded.

By reason of the foregoing, in the case of an audio pulse code modulation tape recorder, abnormal sounds may be generated when the first recorded data is reproduced along with the new data.

US-A-4 126 887 discloses a method of controlling the reading (reproduction) of a digital signal recorded on a track on a magnetic recording medium. The recorded digital signal comprises data blocks each including a data signal and an address marker, the marker being positioned at the beginning of the block. According to a prior proposal mentioned in US-A-4 126 887, the presence of a data block is detected by the detection of an address marker. If an address marker is not detected within a predetermined range, this indicates that either no data block follows the marker or that a unit for reading the address marker has failed properly to detect it. Thus, if the data blocks are read sequentially to the end of the track, and if the final address marker is not detected, it is incorrectly concluded that the penultimate data block is in fact the final one. To solve the problem of possibly not realising that the address marker of the final block on the track has been missed, US-A-4 126 887 provides that two markers (the address marker and a block marker) are recorded in each track. Attempts are made to detect both markers and, if the block marker is detected, but the address marker has not been detected, it is concluded that the address marker has been missed. Only when both markers are not detected is it concluded that the final block on the track has been reached. The disclosure of US-A4 126 887 is in no way concerned with the above-described problem of incorrect retention on the track, together with a new signal, of a previously recorded signal, and provides no indication as to how the problem might be solved.

Preferred embodiments of the present invention described hereinbelow were designed with the intention of providing an apparatus for recording digital signals which is not adversely affected (or which is at least less seriously affected) when dust accumulates on the recording medium. To this end, a discriminating code signal is added and recorded along with the data, and the presence of the previously recorded data wrongly retained on the track in spite of a re-recording operation is detected from the discriminating code signal as set forth below.

According to a first aspect of the present invention there is provided digital signal recording apparatus for recording a digital signal on a track on a magnetic recording medium and for reproducing a digital signal from the track, the apparatus comprising:

encoder means for arranging a digital signal to be recorded into data blocks each including a data signal;

code generating means for supplying a discriminating code signal to the encoder means for inclusion in each of the data blocks, in such a manner that the discrimination code signal is changed each time that a new recording operation is commenced;

recording means for recording the data blocks of a digital signal, including the discriminating code signals, on the track on the magnetic recording medium;

reproducing means for reproducing the data blocks of a digital signal, including the discriminating code signals, from the track of the magnetic recording medium, the reproducing means including decoder means for decoding the reproduced digital signal; and

error identifying means operative to monitor the reproduced discriminating code signals and to produce a detecting signal indicating an error condition if the discriminating code signals reproduced from successive data blocks do not conform to a predetermined relationship;

the decoder means being responsive to said detecting signal to perform an error correction or error compensation operation on the reproduced digital signal.

In such an apparatus, the code generating means ensures that each recorded signal is uniquely identified by virtue of the fact that the discrimination code signal is changed (at least) each time that a new recording operation is commenced. If, on reproduction, one or more data blocks wrongly retained from an earlier recorded signal are present on the tracks together with the signal being reproduced, the error identifying means will detect a divergence from the predetermined relationship of the discrimination code signals reproduced from successive blocks and will produce the detection signal to cause the decoder means to perform the error correction or error compensation operation.

According to a second aspect of the invention there is provided digital signal recording apparatus for recording a new digital signal on a track on a magnetic recording medium on which a digital signal previously has been recorded, the previous digital signal being arranged into data blocks each including a data signal and a discriminating code signal, the apparatus comprising:

reproducing means for reproducing the data blocks of the previous digital signal, including the discriminating code signals, from the track of the magnetic recording medium, the reproducing means including decoder means for generating a decoded digital signal from the previous signal;

error identifying means operative to monitor the reproduced discriminating code signals and to produce a detecting signal indicating an error condition if the discriminating code signals reproduced from successive data blocks do not conform to apredetermined relationship;

the decoder means being responsive to said detecting signal to perform an error correction or error compensation operation on the reproduced previous digital signal;

mixing means for receiving the decoded previous digital signal and the new digital signal and generating a mixed digital signal;

encoder means for receiving the mixed digital signal and signals corresponding to the discriminating code signals reproduced from the previous digital signal and arranging them into data blocks each comprising a data signal and a discriminating code signal; and

recording means for recording the data blocks produced by the encoder means on the track on the magnetic recording medium.

Once more, if, on reproduction, one or more data blocks wrongly retained from an earlier recorded signal are present on the track, together with the previous signal, the error identifying means will detect a divergence from the predetermined relationship of the discriminating code signals reproduced from successive blocks and will produce the detection signal to cause the decoder means to perform the error correction or error compensation operation.

The invention will now be further described, by way of illustrative example, with reference to the accompanying drawings, in which like references designate like items throughout, and in which:

Figs. 1A to 1C are diagrammatic, cross-sectional views of magnetic tape used in a conventional pulse code modulation (PCM) tape recorder;

Fig. 2 is a diagrammatic, cross-sectional view of a recording head of the conventional PCM tape recorder with the magnetic tape positioned in association therewith;

Fig. 3 is a schematic diagram illustrating the composition of a data block as employed in apparatus embodying the present invention;

Fig. 4 is a block diagram of a recording circuit of apparatus embodying the present invention;

Fig. 5 is a block diagram of a reproducing circuit of the apparatus embodying the present invention;

Figs. 6A and 6B are schematic diagrams to which reference will be made in explaining the operation of the circuits of Figs. 4 and 5;

Fig. 7 is a block diagram of a detector circuit of the reproducing circuit of Fig. 5;

Fig. 8 is a block diagram of an alternative detector circuit for use in the circuit of Fig. 5;

Fig. 9 is a timing chart to which reference will be made in explaining the operation of the detector circuit of Fig. 8;

Fig. 10 is a block diagram illustrating another recording and reproducing circuit or apparatus embodying the present invention;

Fig. 11 is a block diagram illustrating a protector and detector circuit used in the circuit of Fig. 10;

Fig. 12 is a timing chart to which reference will be made in explaining the operation of the circuit of Fig. 11;

Fig. 13 is a block diagram illustrating an alternative protector and detector circuit used in the circuit of Fig. 10; and

Fig. 14 is a timing chart to which reference will be made in explaining the operation of the circuit of Fig. 13.

In an apparatus for recording and reproducing digital data, such as a PCM tape recorder or the like, when new data is recorded over the first or previously recorded data on a magnetic recording medium such as magnetic tape, or when new data is recorded after the first recorded data has been erased, an erasing omission or recording omission can occur so that the new data is not recorded if dust accumulates on the tape. As long as the dust remains on the tape, the first recorded data cannot be reproduced. However, when the dust has been removed from the tape, the first recorded data can be reproduced along with the new data. Since it is difficult to detect when an erasing or recording omission has occurred, the reproduced signal from the magnetic tape can be erroneous.

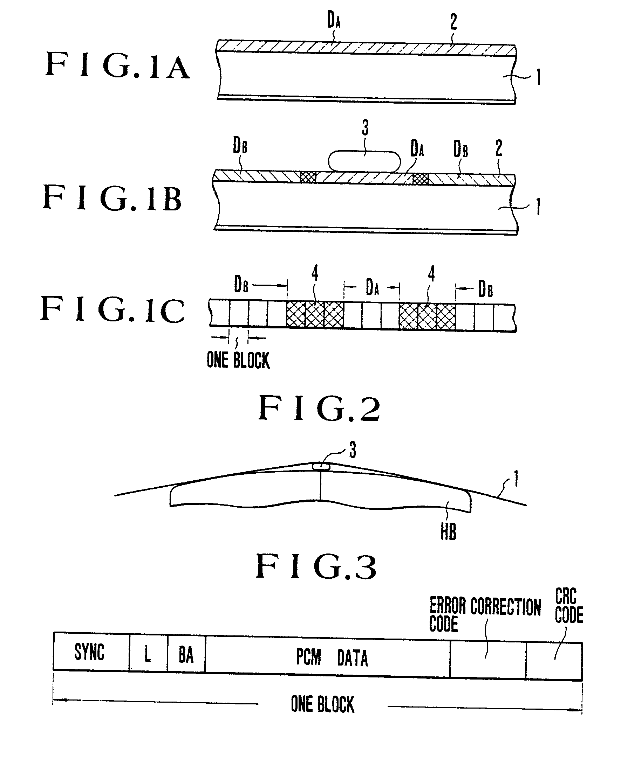

Referring to the accompanying drawings, and initially to Fig. 1A thereof, a magnetic tape 1 has first recorded data $D_A$ recorded on a magnetic layer 2, such data being indicated by obliquely slanting lines. As illustrated in Fig. 1B, dust 3 can accumulate on the surface of the magnetic tape 1. When the magnetic tape 1 is recorded over, or re-recorded, with new data $D_B$, an erasing or recording omission can occur under the dust 3, where the first recorded data $D_A$ remains between two sections of newly recorded data $D_B$. The foregoing result of the dust 3 can be caused by other phenomena, for example by a portion of the magnetic layer 2 which has peeled away or by accumulations of oil, cotton, or other substance on the tape 1.

As illustrated in Fig. 2, a recording head HB has a surface of predetermined curvature with which the magnetic tape 1 is brought into contact. When an attempt is made to record on the magnetic tape 1 with the dust 3 attached thereto, the dust 3 keeps the magnetic tape from contacting the recording head HB and the tape is thus spaced a distance therefrom. The recording head HB generates a magnetic field to perform the recording operation of the magnetic tape 1. Thus, when the magnetic tape 1 is not in intimate contact with the recording head HB, information is not properly recorded on the tape. It can be seen from Fig. 2 that the length of the magnetic tape 1 which is not in contact with the recording head HB, and therefore not influenced by the magnetic field from the recording head, is significantly longer than the length of a particle of dust 3. For example, if the magnetic layer 2 has a thickness of four microns, and the distance between the magnetic tape 1 and a central gap of the recording head HB is more than one micron, the length of the magnetic tape over which recording is not properly performed may be approximately 210 microns. As illustrated in Fig. 1C, erroneous data will be contained in boundary sections 4 between the first or earlier recorded data $D_A$ and the subsequently recorded data $D_B$.

When the magnetic tape 1 is reproduced with the dust 3 attached thereto, the portion of the magnetic tape 1 where the dust 3 is attached is detected as a drop-out since the data $D_A$ thereunder is not reproduced. An error correcting or compensating operation is accordingly performed, so that the influence of the drop-out is significantly reduced or even eliminated. However, when the dust 3 is removed from the magnetic tape 1, for example by frictional forces which are generated between the magnetic tape and the magnetic head HB or a tape guide, the reproduced data includes the first recorded data $D_A$ positioned between boundary sections 4 containing error data, as shown in Fig. 1C. The areas divided by the vertical lines of Fig. 1C each represent one block of data that occupies a length of, for example, 180 microns. As illustrated in Fig. 1C, the first recorded data $D_A$ comprises three blocks of data. Since the first recorded data $D_A$ is not detected as in error, it is included in the reproduced signal from the magnetic tape 1, and can comprise, for example, unusual or abnormal sounds because no error correction is performed thereon.

Fig. 3 illustrates one block of data as recorded in apparatus embodying the present invention. A block sync signal SYNC is recorded at the beginning of the data block, followed by 3 bits of hierarchy data 1, and a block address BA. The block address BA is an address in a sector address and is determined by an address code recorded in a longitudinally positioned control track on the magnetic tape 1. In an illustrative embodiment, a sector comprises four blocks of two bits each. A plurality of words of PCM data comprising an audio PCM signal follow the block address BA. An error correction code follows the pCM data. The error correction code can comprise, for example, an interleave code and two parity codes. A CRC code for error detection occupies the last position in the block of data.

A first parity code can be derived from a plurality of words of the PCM data, and a second parity code can be derived from a plurality of words formed after an interleaving processing operation has been performed on the PCM data. (In the interleaving processing operation, the data is rearranged by delay processing). Accordingly, the ability to correct errors in the PCM data is improved with such processing since each word of PCM data is included in the two series of words from which the parity codes are derived.

Alternatively, an interleaving processing operation can be performed and then first and second parity codes can be derived from two series of digital words comprising even numbered words and odd numbered words. In the second method, the PCM data is divided into odd numbered words and even numbered words, respectively.

An error correction code other than a parity code can be used. The CRC code is used to perform an error check for the data comprising the hierarchy data L, the block address BA, the PCM data and the error correction code.

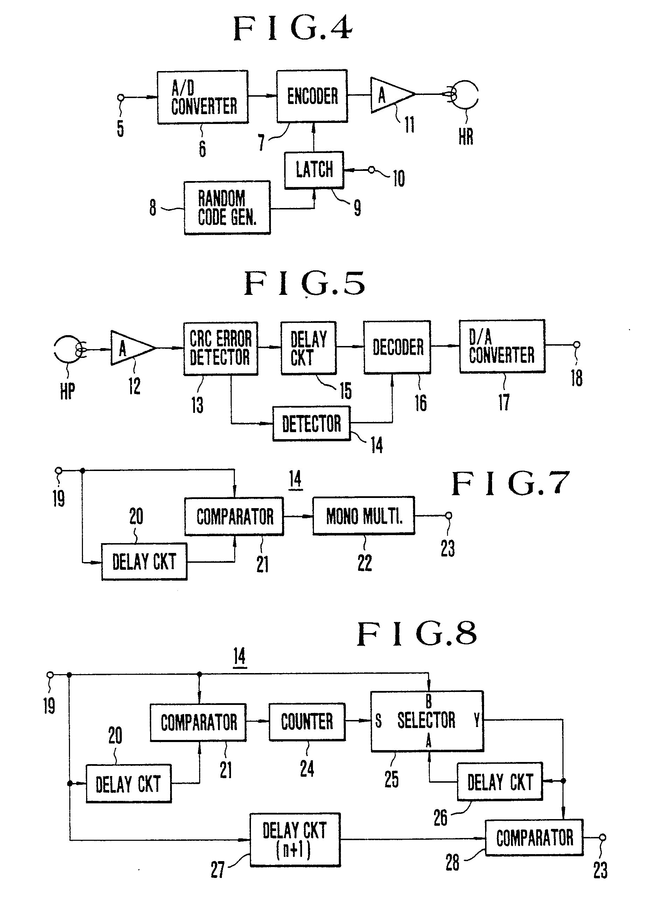

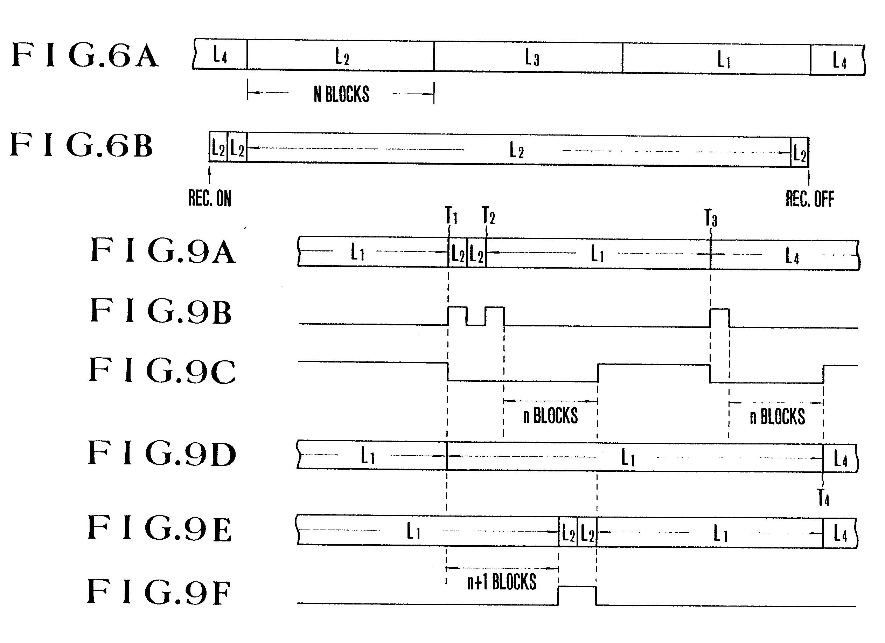

Fig. 4 shows a recording circuit for use in apparatus embodying the invention, for recording in one of a plurality of parallel tracks on a magnetic medium, for example a magnetic tape, having 24 tracks which are recorded in parallel. Data as described with reference to Figure 3 is recorded in each track at a rate of one channel per track. A recording head HR is provided for each track on the magnetic tape. A reproducing circuit for use in the apparatus embodying the invention is shown in Figure 5, such circuit having a playback head Hp for each track on the magnetic tape.

In Fig. 4, an audio signal to be recorded is supplied from an input terminal 5 to an analog-to-digital (A/D) converter 6 which digitises the audio signal. The digitised audio signal is supplied to an encoder 7. A random code generator 8 supplies an output signal to a latch 9. A latch pulse from an input terminal 10 is supplied to the latch 9 whereby two bits are supplied to the encoder 7 as hierarchy data. The encoder 7 performs signal processing operations on the digitised audio signal, such as interleaving, parity production, sync signal generation, block address generation, the addition of hierarchy data, and the like, and generates data in accordance with Fig. 3. The encoder 7 supplies the data to the recording head HR through a recording amplifier 11 for recording in a respective track on the magnetic tape. The random code generator 8 generates a random code which can comprise, for example, a three-bit combination which varies arbitrarily. The three-bit code is selected as hierarchy data by the latch 9 at the start of a recording operation or at the beginning of each plurality of data blocks.

Fig. 6A illustrates one format for the hierarchy data in which the data is added one by one to each of the N blocks. Fig. 6B illustrates an alternative format for the hierarchy data in which the hierarchy data, for example $L_2$, is added at the start of the recording operation and remains the same for each block until the recording ends. Either of the formats illustrated in Figs. 6A and 6B can be selected for use in apparatus embodying the present invention.

In Fig. 6A, references $L_1$, $L_2$, $L_3$ .... indicate hierarchy data which are different from each other. It is highly unlikely that the hierarchy data as described above will coincide with the hierarchy data which has been previously recorded in the same track on the magnetic tape. In the case of the format of Fig. 6A, in which the hierarchy code varies randomly, it is possible to reduce extremely the likelihood that the first recorded data will completely coincide with the later recorded hierarchy data, even though there may be partial coincidence between the previously recorded hierarchy code and the newly generated hierarchy code.

In the format of Fig. 6B, the larger the number of kinds of hierarchy data that are generated the smaller is the probability of coincidence between two randomly generated hierarchy data.

In the reproducing circuit of Fig. 5, the reproduced data from the playback head HP is supplied to a reproduction amplifier 12 and thence to a CRC error detection circuit 13. The result of the error detection by the CRC error detection circuit 13 is added to the PCM data and to the error correction code. The detection result can be, for example, a one bit error flag which is "1" if an error is detected and "0" if no error is detected. At the same time, the hierarchy data which is not in error is also supplied to a detector circuit 14 that generates a mismatch detection output signal in response to the error detection result. A delay circuit 15 receives the error detection result from the CRC error detection circuit 13 and delays the signal for the time necessary for the detector circuit 14 to generate the mismatch detection output signal. The delayed signal from the delay circuit 15 and the output signal from the detector circuit 14 are supplied to a decoder 16. The decoder 16 includes a time base correcting circuit, a deinterleaving circuit which performs the inverse of the interleaving process, an error correction circuit, an error compensating circuit, and so forth. The time base correcting circuit of the deccder 16 forcibly generates an error flag to indicate an error in response to the mismatch detection output signal from the detector circuit 14. An output signal frcm the decoder 16 is supplied to a digital-to-analog (D/A) converter 17, and a reproduced analog signal, for example an audio signal, is supplied to an output terminal 18.

Fig. 7 shows a circuit that may be employed for the detector circuit 14 of Fig. 5. The hierarchy data is supplied from an input terminal 19 through a delay circuit 20 to one input of a comparator 21, and also directly to another input of the comparator 21. Although the hierarchy data comprises only a portion of one data block, the hierarchy data from the input terminal 19 is expanded to a length of one data block by an appropriate padding operation. The delay circuit 20 delays each data block supplied thereto by a time corresponding to one block, so that the comparator 21 compares the current data block with the previous data block. A comparison output signal from the comparator 21 is a "1" if the two input signals supplied thereto differ. When the comparison output signal from the comparator 21 is a "1", the rising portion thereof triggers a monostable multivibrator or "one-shot" 22 which supplies a mismatch output signal to an output terminal 23. The monostable multivibrator 22 generates a mismatch cutput signal which is a "1" over an n-block interval. The length of each n-block interval is selected so that it is longer than the maximum length of a recording omission where the previously recorded data can remain due to, for example, the accumulation of dust on the magnetic tape.

The detector circuit of Fig. 7 is supplied with hierarchy data which is the same for all data blocks recorded from the time recording starts to the time recording ends. On playback, if different hierarchy data is detected, a mismatch output signal which is a "1" in the n-block interval is generated, so that the reproduced n-block data is identified as erroneous. The erroneous data is accordingly processed by the error correction or error compensating circuit in the decoder 16.

Fig. 8 illustrates another circuit for the detector circuit 14 in which a detection counter 24 is connected to the output terminal of the comparator 21 described with reference to Fig. 7 and generates an output signal which is a "1" when the hierarchy data associated with the current data block is identical with the hierarchy data of the previous data block for a period of n-blocks. The detection counter 24 generates an output signal which is a "0" when the hierarchy data from the two data blocks do not coincide. A selector circuit 25 has an input terminal S at which it receives and is controlled by the output signal from the detection counter 24. The reproduced hierarchy data from the input terminal 19 is applied to an input terminal B of the selector circuit 25 which, when the output signal from the detector counter 24 is a "1", delivers the reproduced hierarchy data through an output terminal Y to an input terminal of a comparator 28. The hierarchy data from the terminal Y is also supplied through a delay circuit 26 to an input terminal A of the selector circuit 25 and, when the output signal from the detection counter 24 is "0", the selector circuit 25 supplies from the terminal A to the output terminal Y the hierarchy data held in the delay circuit 26. In the present, illustrative embodiment, the delay circuit 26 holds the digital data fcr the time corresponding to one data block. Another input of the comparator 28 receives the reproduced hierarchy data delayed by (n + 1) blocks in a delay circuit 27. If the output signal frcm the selector circuit 25 does not coincide with the hierarchy data from the delay circuit 27, a mismatch output signal which is a "1" is supplied from the comparator 28 to the output terminal 23.

The detector circuit of Fig. 8 can be supplied with hierarchy data having either the format of Fig. 6A or the format of Fig. 6B. In an example shown in Fig. 9A, the hierarchy data $L_1$ supplied to the input terminal 19 changes to $L_2$ during a two-block interval that begins and ends at the times $T_1$ and $T_2$, respectively. The hierarchy data changes to $L_4$ in the interval beginning at a time $T_3$. The reference letters $L_1$, $L_2$, and $L_4$ indicate hierarchy data which differ from each other. As illustrated in

Fig. 9B, the comparator 21 generates a comparison output signal which is "1" at the time of a mismatch, that is at the time of lack of correspondence between the hierarchy data of the current data block and that of the previous data block.

In response to the comparison output signal from the comparator 21, shown in Fig. 9B, the detection counter 24 generates an output signal shown in Fig. 9C. As earlier noted, the output from the selector circuit 25 is the current data block when the output from the detection counter 24 is a " 1" and the output of the circuit 25 is the previous data block when the output of the detection counter 24 is a "0". Therefore, in the example given, the output signal from the selector circuit 25 is as shown in Fig. 9D, in which a time $T_4$ when the hierarchy data changes from $L_1$ to $L_4$ in the output of the circuit 25 is shown to be delayed by (n + 1) blocks from the time $T_3$ when the change from $L_1$ to $L_4$ occurs in the reproduced hierarchy data. Further, the reproduced hierarchy data supplied to the comparator 28 through the delay circuit 27 is delayed by (n + 1) blocks, as shown in Fig. 9E, with the result that the mismatch output signal generated by the comparator 28 and shown in Fig. 9F is "1" only in the interval of the abnormal or incorrect hierarchy data $L_2$.

In the example illustrated in Fig. 9A, the hierarchy data $L_2$ appearing only in the short time period from the time $T_1$ to the time $T_2$ relates to the previously or first recorded data and is reproduced only when the dust has been removed after an erasing or recording omission has occurred because of such dust. The hierarchy data $L_4$ occurring for the interval of n blocks after the time $T_3$ is of such a length as to be associated with data which has been properly recorded.

The shortest possible time from recording on to recording off for the PCM tape recorder determines the length of time over which the hierarchy data has to extend to be identified as correct. In the present apparatus, each word includes an error correction code with two parity codes. The words which are used to generate the parity codes are recorded on the magnetic tape at dispersed positions because of the interleaving process. In order to prevent an error caused by a recording on or a recording off from extending to more than two words in each parity series, the interval for only a predetermined number of blocks is even if the recording on and recording off is instantaneously performed.

It will be appreciated from the above that, in the present apparatus, if an erasing omission or recording omission occurs during a re-recording operation due to the presence of dust on the magnetic tape at that time, and if the first or originally recorded data is included in the data reproduced after the dust is removed, it is possible to detect the first recorded data merely by identifying and detecting the hierarchy data associated therewith, thereby avoiding an otherwise erroneous error correction operation in which no error correction is performed. Since the hierachy data for the newly recorded data is generated independently from the hierarchy data for the first recorded data, an embodiment of the present invention can be utilised even in a PCM tape recorder which does not include a playback head positioned before the recording head, so that simultaneous recording and playback operation without monitoring can be performed as well as a recording only operation.

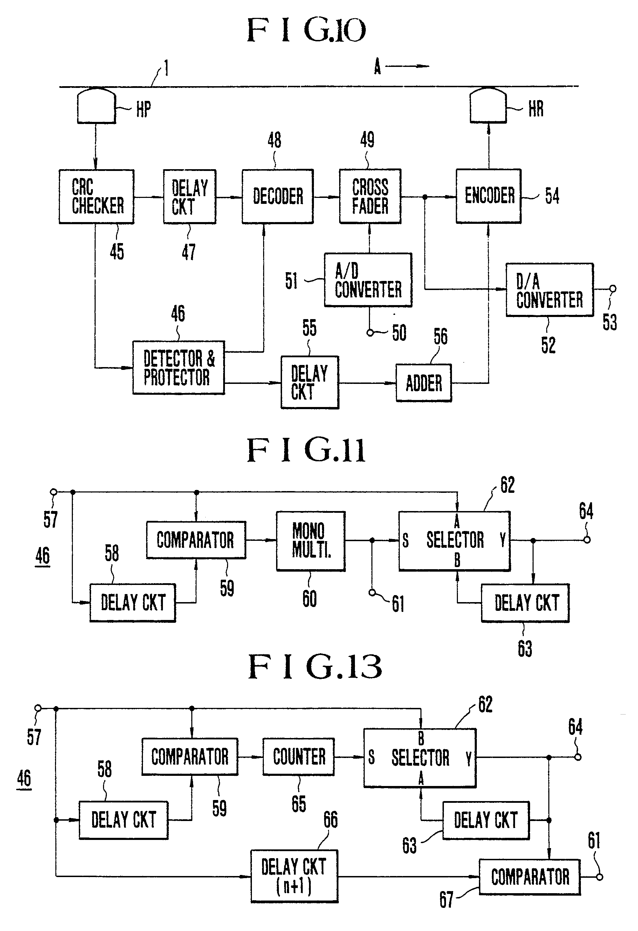

Fig. 10 illustrates an alternative embodiment of the present invention for application to a PCM tape recorder in which a playback head HP is positioned before the recording head HR so that so-called "punch-in" and "punch-out" editing can be performed with respect to PCM digital data recorded on the magnetic tape 1, which is transported in the direction indicated by an arrow A. A point on the magnetic tape 1 passes the playback head HP before it passes the recording head HR. As described before, a plurality of tracks are recorded in parallel on the magnetic tape 1 and can be, for example, 24 in number. Data is recorded on the magnetic tape 1 in accordance with Fig. 3 at a rate of one channel per track. One playback head HP and one recording head Hr are provided for each track, from which it follows that Fig. 10 illustrates the circuit for one track only.

The data reproduced by the playback head HP is supplied to a CRC checker 45 through a reproduction amplifier (not shown), and an error detection operation is performed with respect to the CRC code included in the reproduced digital data. The CRC checker 45 generates an error detection result signal which is added to the PCM data and to each word of the error correction code. The error detection result signal can comprise, for example, a one bit error flag which is "1" if an error is detected and "0" if no error is detected. The hierarchy data which has been identified as error-free is supplied to a detector and protector circuit 46. The detector and protector circuit 46 provides a mismatch detection output signal to a decoder 48 in response to changes in the hierarchy data supplied thereto. The circuit 46 also provides the current, correct hierarchy data (hereinafter sometimes referred to as "protected data"). The reproduced data from the CRC checker 45 is also supplied to the decoder 48 through a delay circuit 47 that delays the signal supplied thereto by an amount corresponding to the time necessary for the circuit 46 to generate its mismatch detection output signal. The decoder 48 includes a time base corrector, a de-interleaving circuit which performs the inverse of the interleaving operation, an error correction circuit, an error compensating circuit, and so forth. As described hereinbefore, the time base corrector generates an error flag to indicate an error in response to the mismatch detection output signal from the detector and protector circuit 46.

The reproduced audio PCM signal is supplied from the decoder 48 to a cross-fader 49. A second audio signal from an audio input terminal 50 is supplied to a A/D converter 51 and thence to the cross-fader 49. When punch-in editing is performed, the data is processed so that the level of the first recorded PCM data being reproduced is gradually decreased while the level of the new PCM data being recorded is gradually increased. When a punch-out editing operation is performed, the levels of the PCM data are varied inversely to the foregoing. The cross-fader 49 can be replaced by a suitable switch which will effect the change-over between the levels of the two signals. The output signal from the cross-fader 49 is supplied to a D/A converter 52 which generates an analog audio signal to be supplied to an audio output terminal 53. At the same time, the output signal from the cross-fader 49 is supplied to an encoder 54 which performs such processing operations as interleaving, parity production, sync signal addition, and the like, so as to provide data in accordance with the arrangement shown in Fig. 3. The data from the encoder 54 is supplied to the recording head HR through a recording amplifier (not shown) for recording on the magnetic tape 1.

The protected data from the detector and protector circuit 46 is supplied to a plus one (+ 1) adder 56 through a delay circuit 55 to produce hierarchy data for the data to be synchronously recorded. The hierarchy data from the adder 56 is supplied to the encoder 54 and added to the new data. The delay circuit 55 provides a predetermined delay corresponding to the distance between the playback head HP and the recording head HR for the synchronous recording of the data.

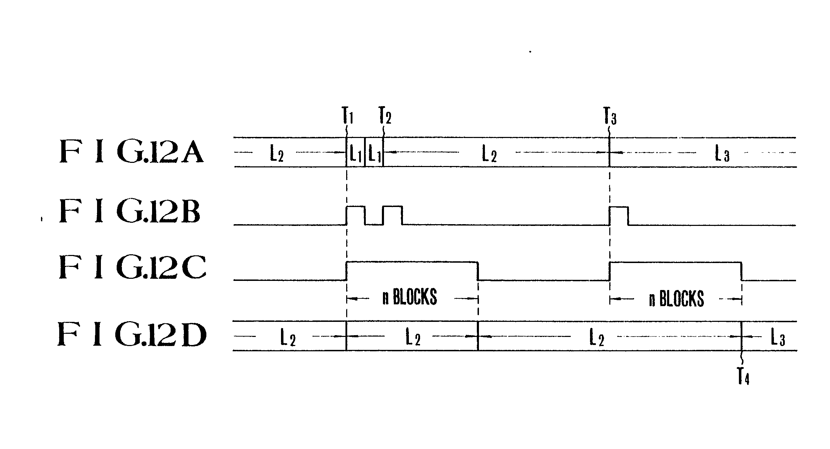

Fig. 11 illustrates one embodiment of the detector and protector circuit 46 of Fig. 10 in which the reproduced hierarchy data is supplied at an input terminal 57 to a delay circuit 58 and a comparator 59. Although the hierarchy data is located in only a portion of one block, as described before, the hierarchy data supplied to the input terminal 57 is expanded to the length of a full block by an appropriate padding operation. The comparator 59 generates a comparison, output signal which is "1" if the two inputs supplied thereto are different. The rising edge of the comparison output signal is supplied to a monostable multivibrator 60 which supplies a mismatch output signal to an output terminal 61 in response to the comparison output signal from the comparator 59. The mismatch output signal is "1" for an interval of n-blocks when the multivibrator 60 is triggered. The length of n-blocks is selected to be larger than the maximum length of an interval in which a recording or erasing omission can occur, for example due to dust on the tape.

Referring to Fig. 12A, it will be seen that the reproduced hierarchy data supplied to the input terminal 57 changes from $L_2$ to $L_1$ at the time interval beginning with the time $T_1$. The hierarchy data continues as $L_1$ for the two blocks ending at the time $T_2$. During the time interval beginning with the time $T_2$, the hierarchy data changes back to $L_2$. At the time interval beginning at the time $T_3$, the hierarchy data changes further to $L_3$.

The reference letters $L_1$, $L_2$ and $L_3$ indicate respective hierarchy data which are different from each other. As illustrated in Fig. 12B, the comparator 59 generates a comparison output signal which is "1" in the case of a mismatch between the current hierarchy data and that of the previous block. The rising part of the comparison output signal triggers the monostable multivibrator 60 to deliver a pulse to a selector circuit 62 which is similar to the selector circuit 25 described with reference to Fig. 8. As illustrated in Fig. 12C, the multivibrator 60 generates a mismatch output signal which is "1" in the n-block intervals which start at the times $T_1$ and $T_3$, respectively. The end-block PCM data and the error correction code are thus identified as erroneous data. In Fig. 12A, the hierarchy data $L_1$ during the short time period beginning with the time $T_1$ and ending at the time $T_2$ is associated with the previously recorded data on the magnetic tape and has been read only because the dust has been removed. The hierarchy data $L_3$ for the long interval which begins at the time $T_3$ is the properly recorded data.

The detector and protector circuit of Fig. 11 identifies the subsequent n-block data as error data even at a normal change point in the hierarchy data.

The selector circuit 62 and a one block delay circuit 63 combine to generate protected data which is supplied from an output Y of the circuit 62 to an output terminal 64. The selector circuit 62 receives the reproduced hierarchy data, and the protected data which has been delayed by one block, at its inputs A and B, respectively, and supplies the hierarchy data from the delay circuit 63, that is, from its input B to its output Y, when the mismatch output signal applied from the monostable multivibrator 60 to its input S is "1". In other words, if a mismatch is detected, the protected data supplied to the output terminal 64 is the data which has been delayed by the delay circuit 63. Otherwise, the current hierarchy data is supplied to the output terminal 64. The protected data generated in response to the reproduced hierarchy data of Fig. 12A is illustrated in Fig. 12D in which the erroneous hierarchy data $L_1$ has been eliminated. The position on the tape which corresponds to the time $T_3$, when the magnetic tape is positioned adjacent the recording head HR, coincides with the point on the magnetic tape indicated at the time $T_4$ when the data is to be recorded. The hierarchy data included in the data to be recorded includes the number one added thereto.

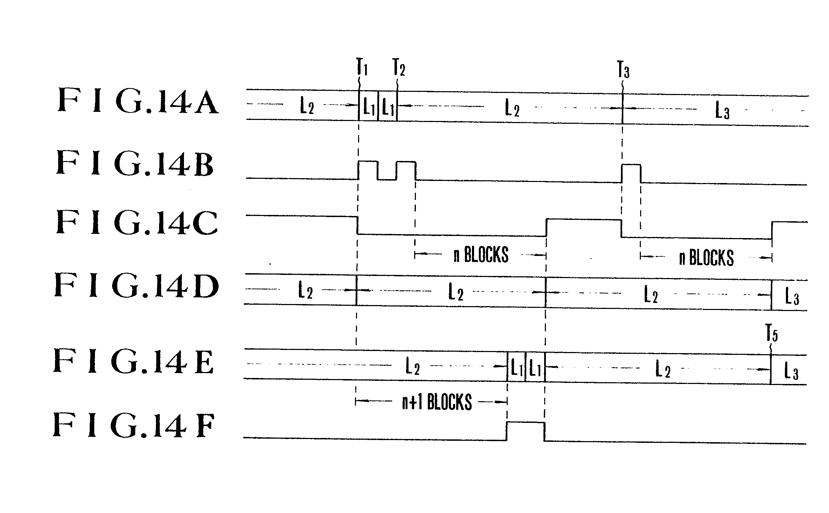

Fig. 13 illustrates another embodiment of the detector and protector circuit 46. When the reproduced hierarchy data shown in Fig. 14A is supplied to the circuit of Fig. 13, the comparator 59 generates a comparison output signal as indicated in Fig. 14B. The comparison output signal is supplied to a detection counter 65 which generates an output signal which is "1" if the current data and the data from the preceding block coincide with each other for n-successive blocks. The detection counter 65 generates an output signal which is "0" whenever the hierarchy data of the currennt block does not coincide with that of the prior block. The output signal is illustrated in Fig. 14C.

When the output signal from the detection counter 65 is "1", the selector circuit 62 selects, as its output, the reproduced hierarchy data from the input terminal 57. When the output signal from the detection counter 65 is "0", the selector circuit 62 selects as its output the hierarchy data held in the one block delay circuit 63. Thus, the protected data supplied to the output terminal 64 is as illustrated in Fig. 14D. A delay circuit 66 delays the reproduced hierarchy data by (n + 1) blocks and then supplies it to a comparator 67. The reproduced hierarchy data, as received through the delay circuit 66, and shown in Fig. 14E, is compared with the protected data in the comparator 67. If the protected data (Fig. 14D) and the delayed hierarchy data (Fig. 14E) do not coincide, the comparator 67 supplies a mismatch output signal to the output terminal 61. In one embodinment, such mismatch output signal from the comparator 67 is "1" to indicate lack of coincidence. Thus, as illustrated in Fig. 14F, the mismatch output signal is "1" only during the period when the erroneous hierarchy data $L_1$, corresponding to a previous recording, is generated. With reference to the circuit of Fig. 11, the mismatch output signal appears at the change point of the normal hierarchy data. An error flag is not forcibly set by the circuit of Fig. 13.

It will be appreciated from the above description that even if an erasing or recording omission occurs because of the presence of dust during a re-recording operation, the previously recorded data included in the reproduced data can be detected simply by detecting the corresponding hierarchy data. Accordingly, an appropriate error correction operation can be performed.

The present invention is not limited in its application to hierarchy data comprising 3 bits, but can be applied to hierarchy data made up of any number of bits. In addition, the hierarchy data is not limited to data which changes plus 1 by plus 1. It is possible to use hierarchy data which changes in a circulating fashion in accordance with a regular rule such as plus 2 by plus 2 or the like. Since the hierarchy data coincides at the end of a circulating period for such hierarchy data, it could happen that the previously recorded data and the new data coincide. However, such a coincidence rarely occurs in practice, and can be neglected in considering the operation of the present apparatus.

The above described embodiments of the present invention are applied to a PCM tape recorder with a fixed head system. It is to be appreciated that the present invention is not limited to such a tape recorder, and can be applied to a tape recorder with a rotary head system. It is also possible to apply the present invention to a disc recording and/or reproducing apparatus having a magnetic or optical reading system. The present invention is, of course, not limited to an audio PCM signal, but can be applied to the recording and reproducing of other digital information signals, such as video PCM signals and the like.

**Claims**

1. Digital signal recording apparatus for recording a digital signal on a track on a magnetic recording medium (1) and for reproducing a digital signal from the track (1), the apparatus comprising:

encoder means (7) for arranging a digital signal to be recorded into data blocks each including a data signal;

code generating means (8, 9) for supplying a discriminating code signal (L) to the encoder means (7) for inclusion in each of the data blocks, in such a manner that the discrimination code signal (L) is changed each time that a new recording operation is commenced;

recording means (HR) for recording the data blocks of a digital signal, including the discriminating code signals (L), on the track on the magnetic recording medium (1);

reproducing means (HP etc.) for reproducing the data blocks of a digital signal, including the discriminating code signals (L), from the track of the magnetic recording medium (1), the reproducing means (HP etc.) including decoder means (16) for decoding the reproduced digital signal; and

error identifying means (14) operative to monitor the reproduced discriminating code signals (L) and to produce a detecting signal (23) indicating an error condition if the discriminating code signals (L) reproduced from successive data blocks do not conform to a predetermined relationship;

the decoder means (16) being responsive to said detecting signal (23) to perform an error correction or error compensation operation on the reproduced digital signal.

2. Apparatus according to claim 1, wherein the code generating means (8, 9) is operative during each recording operation to supply the same discriminating code signal (L) to the encoder means (7) for inclusion in each of the data blocks (Figure 6B).

3. Apparatus according to claim 1, wherein the code generating means (8, 9) is operative, during each recording operation, to supply successive different discriminating code signals ($L_4$, $L_3$, $L_2$, $L_1$) to the encoder means (7) whereby a different discriminating code signal is included in each of a series of successive pluralities (N) of the data blocks (Figure 6A).

4. Apparatus according to claim 1 or claim 2, wherein the error identifying means (14) comprises:

delay means (20) for delaying the discriminating code signal included in each reproduced data block by a delay time corresponding to one data block;

comparator means (21) for comparing each delayed discriminating code signal with the current discriminating code signal and generating a trigger pulse in response to the delayed and current discriminating code signals differing from one another; and

pulse generating means (22) for generating said detection signal (23) in response to the trigger pulse.

5. Apparatus according to claim 4, wherein said detection signal (23) produced by the pulse generating means (22) has a duration equal to a predetermined number (n) of the data blocks.

6. Apparatus according to claim 1, claim 2 or claim 3, wherein the error identifying means (14) comprises:

first delay means (20) for delaying the discriminating code signal (L) included in each reproduced data block by a delay time corresponding to one data block;

first comparator means (21) for comparing each delayed discriminating code signal with the current discriminating code signal and generating a pulse in response to the delayed and current discriminating code signals differing from one another;

counter means (24) for receiving the pulses from the first comparator means (21) and generating a control signal indicative of whether or not the delayed and current discriminating code signals have differed from one another for a period of n successive reproduced data blocks;

selector means (25) connected to receive the current discriminating code signals and said control signal from the counter means (24) and operative to pass the current discriminating code signals to an output terminal (Y) thereof when said control signal indicates that the delayed and current discriminating code signals have not differed from one another for a period of n successive data blocks;

second delay means (26) having a delay time corresponding to one data block, the second delay means (26) being connected between the output terminal (Y) and an input terminal (A) of the selector means (25) and the selector means being operative to connect its input terminal (A) to its output terminal (Y) when said control signal from the counter means (24) does not indicate that the delayed and current discriminating code signals have not differed from one another for a period of n successive data blocks;

third delay means (27) for delaying the current discriminating code signals by a delay time corresponding to n + 1 data blocks; and

second comparator means (28) for comparing the delayed discriminating code signals from the third delay means (27) with the discriminating code signals produced at the output terminal (Y) of the selector means (25) and generating said detection signal (23) in response thereto.

7. Apparatus according to any one of the preceding claims, wherein the code generating means (8, 9) is operative randomly to generate the discriminating code signals (L).

8. Apparatus according to claim 7, wherein the code generating means (8, 9) comprises a random code generator (8) for generating a signal with a predetermined number of bits, and latch means (9) for receiving the signal from the random code generator (8) and supplying fewer than the predetermined number of bits to the encoding means (7).

9. Apparatus according to any one of the preceding claims, wherein the recording means (HR) comprises transducer means (HR) for recording the digital signal in the track on the magnetic record medium (1).

10. Apparatus according to any one of the preceding claims, wherein the reproducing means (HP etc.) includes transducer means (HP) for reproducing the digital signal recorded in the track on the magnetic record medium (1).

11. Apparatus according to any one of the preceding claims, wherein the reproducing means (HP etc.) comprises error detector means (13) for detecting an error correction code signal included in each reproduced data block and delay means (15) connected between the error detector means (13) and the decoder means (16) for delaying each data block from the error detector means.

12. Digital signal recording apparatus for recording a new digit signal on a track on a magnetic recording medium (1) on which a digital signal previously has been recorded, the previous digital signal being arranged into data blocks each including a data signal and a discriminating code signal (L), the apparatus comprising:

reproducing means (HP etc.) for reproducing the data blocks of the previous digital signal, including the discriminating code signals (L), from the track of the magnetic recording medium, the reproducing means (HP etc.) including decoder means (48) for generating a decoded digital signal from the previous signal;

error identifying means (46) operative to monitor the reproduced discriminating code signals (L) and to produce a detecting signal (61) indicating an error condition if the discriminating code signals (L) reproduced from successive data blocks do not conform to a predetermined relationship;

the decoder means (48) being responsive to said detecting signal (61) to perform an error correction or error compensation operation on the reproduced previous digital signal;

mixing means (49) for receiving the decoded previous digital signal and the new digital signal and generating a mixed digital signal;

encoder means (54) for receiving the mixed digital signal and signals corresponding to the discriminating code signals reproduced from the previous digital signal and arranging them into data blocks each comprising a data signal and a discriminating code signal; and

recording means (HR) for recording the data blocks produced by the encoder means (54) on the track on the magnetic recording medium (1).

13. Apparatus according to claim 12, comprising delay means (55) for delaying the discriminating code signals from the error identifying means (46), and adding means (56) for receiving the delayed discriminating code signals and supplying new discriminating code signals in response thereto to the encoder means (54).

14. Apparatus according to claim 13, comprising error detector means (45) for detecting an error correction code signal included in each reproduced data block, and another delay means (47) connected between the error detector means (45) and the decoder means (48).

15. Apparatus according to claim 12, claim 13 or claim 14, wherein the error identifying means (46) is operative to supply said detection signal (61) to the decoder means (48) when the discriminating code signal included in the current data block differs from the discriminating code signal included in the preceding data block.

16. Apparatus according to claim 12, claim 13 or claim 14, wherein the error identifying means (46) includes:

first delay means (58) for delaying the discriminating code signal included in each reproduced data block by a delay time corresponding to one data block;

comparator means (59) for comparing each delayed discriminating code signal with the current discriminating code signal and generating a trigger pulse in response to the delayed and current discriminating code signals differing from one another;

pulse generating means (60) for generating said detection signal (61) in response to the trigger pulse,

selector means (62) connected to receive the current discriminating code signals and said detection signal (61) from the pulse generating means (60); and

second delay means (63) having a delay time corresponding to one data block and being connected between an output terminal (Y) and an input terminal (A) of the selector means (62), the selector means (62) being operative to supply, to its output terminal (Y): the preceding discriminating code signals, as generated by the second delay means (63), when said detection signal (61) from the pulse generating means (60) is supplied thereto; and, at all other times, the current discriminating code signals.

17. Apparatus according to claim 16, wherein said detection signal (61) produced by said pulse generating means (60) has a duration equal to a predetermined number (n) of the data blocks.

18. Apparatus according to claim 12, claim 13 or claim 14, wherein the error identification means (46) includes:

first delay means (58) for delaying the discriminating code signal included in each reproduced data block by a delay time corresponding to one data block.

first comparator means (59) for comparing each delayed discriminating code signal with the current discriminating code signal and generating a pulse in response to the delayed and current discriminating code signals differing from one another;

counter means (65) for receiving the pulses from the first comparator means (59) and generating a control signal indicative of whether or not the delayed and current discriminating code signals have differed from one another for a period of n successive reproduced data blocks;

selector means (62) connected to receive the current discriminating code signals and said control signal from the counter means (65) and operative to pass the current discriminating code signals to an output terminal (Y) thereof when said control signal indicates that the delayed and current discriminating code signals have not differed from one another for a period of n successive data blocks;

second delay means (63) having a delay time corresponding to one data block, the second delay means (63) being connected between the output terminal (Y) and an input terminal (A) of the selector means (62) and the selector means being operative to connect its input terminal (A) to its output terminal (Y) when said control signal from the counter means (65) does not indicate that the delayed and current discriminating code signals have not differed from one another for a period of n successive data blocks;

third delay means (66) for delaying the current discriminating code signals by a delay time corresponding to n + 1 data blocks; and

second comparator means (67) for comparing the delayed discriminating code signals from the third delay means (66) with the discriminating code signals produced at the output terminal (Y) of the selector means (62) and generating said detection signal (61) in response thereto.

**Patentansprüche**

1. Digitalsignal-Aufzeichnungsgerät zur Aufzeichnung eines Digitalsignals auf einer Spur eines magnetischen Aufzeichnungsmediums (1) und zur Wiedergabe eines Digitalsignals von dieser Spur,

wobei das Gerät folgende Teile enthält:

eine Kodiereinrichtung (7) zum Aufbereiten eines Digitalsignals, das in Datenblöcken aufgezeichnet werden soll, die jeweils ein Datensignal enthalten,

eine Kodegeneratoreinrichtung (8, 9) zur Zuführung eines Diskriminator-Kodesignals (L) zu der Kodiereinrichtung (7), das derart in die einzelnen Datenblöcke einzufügen ist, daß das Diskriminator-Kodesignal (1) jedesmal geändert wird, wenn ein neuer Aufzeichnungsvorgang beginnt,

eine Aufzeichnungseinrichtung (HR) zum Aufzeichnen der Datenblöcke eines Digitalsignals einschließlich der Diskriminator-Kodesignale (L) in der Spur des magnetischen Aufzeichnungsmediums (1),

eine Wiedergabeeinrichtung (HP usw.) zur Wiedergabe der Datenblöcke eines Digitalsignals einschließlich der Diskriminator-Kodesignale (L) von der Spur des magnetischen Aufzeichnungsmediums (1), wobei diese Wiedergabeeinrichtung (HP usw.) eine Dekodiereinrichtung (16) zur Dekodierung des wiedergegebenen Digitalsignals enthält, sowie eine Fehleridentifizierungseinrichtung (14) zur Oberwachung der wiedergegebenen Diskriminator-Kodesignale (1) und zur Erzeugung eines einen Fehlerzustand kennzeichnenden Detektorsignals (23), falls die von aufeinanderfolgenden Datenblöcken wiedergegebenen Diskriminator-Kodesignale (L) nicht einar vorbestimmten Beziehung entsprechen, wobei die Dekodiereinrichtung (16) auf das Detektorsignal (23) anspricht, um das wiedergegebene Digitalsignal einer Fehlerkorrektur oder -kompensation zu unterwerfen.

2. Gerät nach Anspruch 1, bei dem die Kodegeneratoreinrichtung (8, 9) während jedes Aufzeichnungsvorgangs der Kodiereinrichtung (7) dasselbe Diskriminator-Kodesignal (L) zur Einfügung in die einzelnen Datenblöcke zuführt (Fig. 6B).

3. Gerät nach Anspruch 1, bei dem die Kodegeneratoreinrichtung (8, 9) während jedes Aufzeichnungsvorgangs der Kodiereinrichtung (7) aufeinanderfolgend. unterschiedliche Diskriminator-Kodesignale ($L_4$, $L_3$, $L_2$, $L_1$) zuführt, so daß in jede aus einer Serie von aufeinanderfolgenden Vielzahlen (N) von Datenblöcken jeweils unterschiedliche Diskriminator-Kodesignale eingefügt werden (Fig. 6A).

4. Gerät nach Anspruch 1 oder 2, bei dem die Fehleridentifizierungseinrichtung (14) folgende Teile umfaßt:

eine Verzögerungseinrichtung (20) zur Verzögerung des in jedem der wiedergegebenen Datenblöcke enthaltenen Diskriminator-Kodesignals um eine einem Datenblock entsprechende Verzögerungszeit,

eine Vergleichereinrichtung (21) zum Vergleichen jedes der verzögerten Diskriminator-Kodesignale mit dem jeweiligen laufenden Diskriminator-Kodesignal und zur Erzeugung eines Triggerimpulses, wenn das verzögerte und das laufende Diskriminator-Kodesignal voneinander abweichen,

sowie eine Impulsgeneratoreinrichtung (22) zur Erzeugung des genannten Detektorsignals (23) in Abhängigkeit von dem Triggerimpuls.

5. Gerät nach Anspruch 4, bei dem das von der Impulsgeneratoreinrichtung (22) erzeugte Detektorsignal (23) eine Dauer hat, die gleich einer vorbestimmten Anzahl (n) von Datenblöcken ist.

6. Gerät nach Anspruch 1, 2 oder 3, bei dem die Fehleridentifizierungseinrichtung (14) folgende Teile enthält:

eine erste Verzögerungseinrichtung (20) zur Verzögerung des in jedem wiedergegebenen Datenblock enthaltenen Diskriminator-Kode signals (L) um eine einem Datenblock entsprechende Verzögerungszeit,

eine erste Vergleichereinrichtung (21) zum Vergleichen jedes der verzögerten Diskriminator-Kodesignale mit dem laufenden Diskriminator-Kodesignal und zur Erzeugung eines Impulses in Abhängigkeit davon, ob das verzögerte und das laufende Diskriminator-Kodesignal voneinander abweichen,

eine Zähleinrichtung (24) zur Aufnahme der von der ersten Vergleichereinrichtung (21) erzeugten Impulse und zur Erzeugung eines Steuersignals, das dafür kennzeichnend ist, ob das verzögerte und das laufende Diskriminator-Kodesignal während einer Periode von n aufeinanderfolgenden wiedergegebenen Datenblöcken voneinander abweichen oder nicht,

eine Wähleinrichtung (25), die so angeordnet ist, daß sie die laufenden Diskriminator-Kodesignale und das genannte Steuersignal der Zähleinrichtung (24) aufnimmt und das laufende Diskriminator-Kodesignal zu ihrem Ausgang (Y) passieren läßt, wenn das Steuersignal anzeigt, daß das verzögerte und das laufende Diskriminator-Kodesignal während einer Periode von n aufeinanderfolgenden Datenblöcken sich nicht voneinander unterschieden haben,

eine zweite Verzögerungseinrichtung (26) mit einer einem Datenblock entsprechenden Verzögerungszeit, wobei diese zweite Verzögerungseinrichtung (26) zwischen einem Ausgang (Y) und einem Eingang (A) der Wähleinrichtung (25) angeordnet ist und die Wähleinrichtung diesen Eingang (A) mit ihrem Ausgang (Y) verbindet, wenn das von der Zähleinrichtung (24) kommende Steuersignal nicht anzeigt, daß das verzögerte und das laufende Diskriminator-Kodesignal während einer Periode von n aufeinanderfolgenden Datenblöcken nicht voneinander abgewichen sind,

eine dritte Verzögerungseinrichtung (27) zur Verzögerung des laufenden Diskriminator-Kodesignals um eine Verzögerungszeit, die n + 1 Datenblöcken entspricht,

sowie eine zweite Vergleichereinrichtung (28) zum Vergleichen der verzögerten Diskriminator-Kodesignale der dritten Verzögerungseinrichtung (27) mit den Diskriminator-Kodesignalen, die an dem Ausgang (Y) der Wähleinrichtung (25) erzeugt werden, und zur Erzeugung des Detektorsignals (23) in Abhängigkeit hiervon.

7. Gerät nach einem der vorhergehenden Ansprüche, bei dem die Kodegeneratoreinrichtung (8, 9) die Diskriminator-Kodesignale (L) in einer Zufallsfolge erzeugt.

8. Gerät nach Anspruch 7, bei dem die Kodegeneratoreinrichtung (8, 9) einen Zufallskodegenerator zur Erzeugung eines Signals mit einer vorbestimmten Anzahl von Bits umfaßt sowie Haltemittel (9), die das Signal des Zufallskodegenerators (8) aufnehmen und der Kodiereinrichtung (7) weniger als die vorbestimmte Anzahl von Bits zuführen.

9. Gerät nach einem der vorhergehenden Ansprüche, bei dem die Aufzeichnungseinrichtung (HR) eine Wandlereinrichtung (HR) zur Aufzeichnung des Digitalsignals in der Spur des magnetischen Aufzeichnungsmediums (1) enthält.

10. Gerät nach einem der vorhergehenden Ansprüche, bei dem die Wiedergabeeinrichtung (HP usw.) eine Wandlereinrichtung (HP) zur Wiedergabe des in der Spur des magnetischen Aufzeichnungsmediums (1) aufgezeichneten Digitalsignals enthält.

11. Gerät nach einem der vorhergehenden Ansprüche, bei dem die Wiedergabeeinrichtung (HP usw.) eine Fehlerdetektoreinrichtung (13) zur Detektion eines in jedem der wiedergegebenen Datenblöcke enthaltenen Fehlerkorrektur-Kodesignals umfaßt sowie eine zwischen der Fehlerdetektoreinrichtung (13) und der Dekodiereinrichtung (16) angeordnete Verzögerungseinrichtung (15) zur Verzögerung jedes der von der Fehlerdetektoreinrichtung kommenden Datenblocks.

12. Digitalsignal-Aufzeichnungsgerät zur Aufzeichnung eines neuen Digitalsignals auf einer Spur eines magnetischen Aufzeichnungsmediums (1), auf der zuvor ein Digitalsignal aufgezeichnet wurde, das in Datenblöcken angeordnet ist, die jeweils ein Datensignal und ein Diskriminator-Kodesignal (L) enthalten,

wobei das Gerät folgende Teile enthält:

eine Wiedergabeeinrichtung (HP usw.) zur Wiedergabe der Datenblöcke des vorherigen Datensignals einschließlich der Diskriminator-Kodesignale (L) von der Spur des magnetischen Aufzeichnungsmediums, wobei die Wiedergabeeinrichtung (HP usw.) eine Dekodiereinrichtung (48) zur Erzeugung eines dekodierten Digitalsignals aus dem vorherigen Signal umfaßt,

eine Fehleridentifizierungseinrichtung (46) zur Überwachung der wiedergegebenen Diskriminator-Kodesignale (L) und zur Erzeugung eines Detektorsignals (61), das einen Fehlerzustand anzeigt, falls die von aufeinanderfolgenden Datenblöcken wiedergegebenen Diskriminator-Kodesignale (L) nicht einer vorbestimmten Beziehung entsprechen, wobei die Dekodiereinrichtung (48) auf das genannte Detektorsignal (61) anspricht und das wiedergebene vorherige Digitalsignal einer Fehlerkorrektur oder -kompensation unterwirft,

eine Mischeinrichtung (49) zur Aufnahme des dekodierten vorherigen Digitalsignals und des neuen Digitalsignals und zur Erzeugung eines gemischten Digitalsignals,

eine Kodiereinrichtung (54) zur Aufnahme des gemischten Digitalsignals sowie von Signalen, die den von dem vorherigen Digitalsignal wiedergegebenen Diskriminator-Kodesignalen entsprechen, und zur Anordnung dieser Signale in Datenblöcken, die jeweils ein Datensignal und ein Diskriminator-Kodesignal enthalten,

sowie eine Aufzeichnungseinrichtung (HR) zum Aufzeichnen der von der Kodiereinrichtung (54) erzeugten Datenblöcke in der Spur das magnetischen Aufzeichnungsmediums (1).

13. Gerät nach Anspruch 12, bei dem eine Verzögerungseinrichtung (55) zur Verzögerung der von der Fehleridentifizierungseinrichtung (46) kommenden Diskriminator-Kodesignale sowie eine Addiereinrichtung (56) vorgesehen sind, die die verzögerten Diskriminator-Kodesignale aufnimmt und in Abhängigkeit hiervon der Kodiereinrichtung (54) neue Diskriminator-Kodesignale zuführt.

14. Gerät nach Anspruch 13 mit einer Fehlerdetektoreinrichtung (54) zur Detektion eines in jedem der wiedergegebenen Datenblöcke enthaltenen Fehlerkorrektur-Kodesignals sowie mit einer weiteren Verzögerungseinrichtung (47), die zwischen der Fehlerdetektoreinrichtung (54) und der Dekodiereinrichtung (58) angeordnet ist.

15. Gerät nach Anspruch 12, 13 oder 14, bei dem die Fehleridentifizierungseinrichtung (46) die Zuführung des Detektorsignals (61) zu der Dekodiereinrichtung (48) bewirkt, wenn das in dem laufenden Datenblock enthaltene Diskriminator-Kodesignal von dem in dem vorangehenden Datenblock enthaltenen Diskriminator-Kodesignal abweicht.

16. Gerät nach Anspruch 12, 13 oder 14, bei dem die Fehleridentifizierungseinrichtung (46) folgende Teile enthält:

eine erste Verzögerungseinrichtung (58) zur Verzögerung des in jedem wiedergegebenen Datenblock enthaltenen Diskriminator-Kodesignals um eine einem Datenblock entsprechende Verzögerungszeit,

eine Vergleichereinrichtung (59) zum Vergleichen jedes der verzögerten Diskriminator-Kodesignale mit dem laufenden Diskriminator-Kodesignal und zur Erzeugung eines Triggerimpulses, wenn das verzögerte und das laufende Diskriminator-Kodesignal voneinander abweichen,

eine Impulsgeneratoreinrichtung (60) für die Erzeugung des genannten Detektorsignals (61) in Abhängigkeit von dem Triggerimpuls,

eine Wähleinrichtung (62), die so angeordnet ist, daß sie die laufenden Diskriminator-Kodesignale und das Detektorsignal (61) der Impulsgeneratoreinrichtung (60) aufnimmt,

sowie eine zweite Verzögerungseinrichtung (63) mit einer einem Datenblock entsprechenden Verzögerungszeit, wobei diese zweite Verzögerungseinrichtung (26) zwischen einem Ausgang (Y) und einem Eingang (A) der Wähleinrichtung (62) angeordnet ist und die Wähleinrichtung ihrem Ausgang (Y) die von der zweiten Verzögerungseinrichtung (63) erzeugten vorangehenden Diskriminator-Kodesignale zuführt, wenn ihr das Detektorsignal (61) der Impulsgeneratoreinrichtung (60) zugeführt wird, in allen anderen Fällen hingegen, die laufenden Diskriminator-Kodesignale.

17. Gerät nach Anspruch 16, bei dem das von der Impulsgeneratoreinrichtung (60) erzeugte Detektorsignal (61) eine Dauer hat, die einer vorbestimmten Anzahl (n) von Datenblöcken entspricht.

18. Gerät nach Anspruch 12, 13 oder 14, bei dem die Fehleridentifizierungseinrichtung (46) folgende Teile enthält:

eine erste Verzögerungseinrichtung (58) zur Verzögerung des in jedem wiedergegebenen Datenblock enthaltenen Diskriminator-Kodesignals um eine einem Datenblock entsprechende Verzögerungszeit,

eine erste Vergleichereinrichtung (21) zum Vergleichen jedes der verzögerten Diskriminator-Kodesignale mit dem laufenden Diskriminator-Kodesignal und zur Erzeugung eines Impulses in Abhängigkeit davon, ob das verzögerte und das laufende Diskriminator-Kodesignal voneinander abweichen,

eine Zähleinrichtung (65) zur Aufnahme der Impulse der ersten Vergleichereinrichtung (21) und zur Erzeugung eines Steuersignals, das dafür kennzeichnend ist, ob das verzögerte und das laufende Diskriminator-Kodesignal während einer Periode von n aufeinanderfolgenden wiedergegebenen Datenblöcken voneinander abweichen oder nicht,

eine Wähleinrichtung (62), die so angeordnet ist, daß sie die laufenden Diskriminator-Kodesignale und das genannte Steuersignal der Zähleinrichtung (65) aufnimmt und das laufende Diskriminator-Kodesignal zu ihrem Ausgang (Y) passieren läßt, wenn das Steuersignal anzeigt, daß das verzögerte und das laufende Diskriminator-Kodesignal während einer Periode von n aufeinanderfolgenden Datenblöcken sich nicht voneinander unterschieden haben,

eine zweite Verzögerungseinrichtung (63) mit einer einem Datenblock entsprechenden Verzögerungszeit, wobei diese zweite Verzögerungseinrichtung (63) zwischen einem Ausgang (Y) und einem Eingang (A) der Wähleinrichtung (62) angeordnet ist und die Wähleinrichtung diesen Eingang (A) mit ihrem Ausgang (Y) verbindet, wenn das von der Zähleinrichtung (65) kommende Steuersignal nicht anzeigt, daß das verzögerte und das laufende Diskriminator-Kodesignal während einer Periode von n aufeinanderfolgenden Datenblökken nicht voneinander abgewichen sind,

eine dritte Verzögerungseinrichtung (66) zur Verzögerung des laufenden Diskriminator-Kodesignals um eine Verzögerungszeit, die n + 1 Datenblöcken entspricht,

sowie eine zweite Vergleichereinrichtung (67) zum Vergleichen der von der dritten Verzögerungseinrichtung (66) kommenden verzögerten Diskriminator-Kodesignale mit den Diskriminator-Kodesignalen, die an dem Ausgang (Y) der Wähleinrichtung (62) erzeugt werden, und zur Erzeugung des Detektorsignals (23) in Abhängigkeit hiervon.

**Revendications**

1. Appareil d'enregistrement de signaux numériques destiné à enregistrer un signal numérique sur une piste d'un support d'enregistrement magnétique (1) et à reproduire un signal numérique à partir de la piste (1), l'appareil comportant:

un codeur (7) destiné à arranger un signal numérique à enregistrer en des blocs de données contenant chacun un signal de données;

un générateur de code (8, 9) qui fournit un signal de code de discrimination (L) au codeur (7) pour l'inclure dans chacun des blocs de données de manière que le signal de code de discrimination (1) soit changé chaque fois qu'une nouvelle opération d'enregistrement est commencée;

un dispositif d'enregistrement (HR) qui enregistre les blocs de données d'un signal numérique, contenant les signaux de code de discrimination (L), sur la piste du support d'enregistrement magnétique (1);

un dispositif de reproduction (HP, etc.) qui reproduit les blocs de données d'un signal numérique, contenant les signaux de code de discrimination (L), à partir de la piste du support d'enregistrement magnétique (1), le dispositif de reproduction (HP, etc.) comprenant un décodeur (16) qui décode le signal numérique reproduit; et

un dispositif d'identification d'erreur (14) ayant pour fonction de contrôler les signaux de code de discrimination reproduits (L) et de produire un signal de détection (23) indiquant une condition d'erreur si les signaux de code de discrimination (1) reproduits à partir de blocs successifs de données ne sont pas conformes à une relation prédéterminée;

le décodeur (16) réagissant audit signal de détection (23) en exécutant une opération de correction d'erreur ou de compensation d'erreur sur le signal numérique reproduit.

2. Appareil selon la revendication 1, dans lequel le générateur de code (8, 9) a pour fonction, pendant chaque opération d'enregistrement, de fournir le même signal de code de discrimination (1) au codeur (7) pour l'inclure dans chacun des blocs de données (figure 6B).

3. Appareil selon la revendication 1, dans lequel le générateur de code (8, 9) a pour fonction, pendant chaque opération d'enregistrement, de fournir des signaux de code de discrimination successifs différents ($L_4$, $L_3$, $L_2$, $L_1$) au codeur (7) de manière qu'un signal de code de discrimination différent soit inclus dans chacun d'une série de groupes successifs (N) de blocs de données (figure 6A).

4. Appareil selon la revendication 1 ou 2, dans lequel le dispositif d'identification d'erreur (14) comporte:

un circuit à retard (20) qui retarde le signal de code de discrimination inclus dans chaque bloc de données reproduit d'un retard correspondant à un bloc de données;

un comparateur (21) qui compare chaque signal de code de discrimination retardé avec le signal de code de discrimination en cours et qui produit un impulsion de déclenchement en réponse aux signaux de code de discrimination retardés et en cours différents les uns des autres; et

un générateur d'impulsions (22) qui produit ledit signal de détection (23) en réponse à l'impulsion de déclenchement.

5. Appareil selon la revendication 4, dans lequel ledit signal de détection (23) produit par le générateur d'impulsions (22) a une durée égale à un nombre prédéterminé (n) de blocs de données.

6. Appareil selon la revendication 1, la revendication 2 ou la revendication 3, dans lequel le dispositif d'identification d'erreur (14) comporte:

un premier circuit à retard (20) qui retarde le signal de code de discrimination (1) inclus dans chaque bloc de données reproduit d'un retard correspondant à un bloc de données;

un premier comparateur (21) qui compare chaque signal de code de discrimination retardé avec le signal de code de discrimination en cours et qui produit une impulsion si les signaux de code de discrimination retardés et en cours diffèrent l'un de l'autre;

un compteur (24) qui reçoit les impulsions provenant du premier comparateur (21) et qui produit un signal de commande indiquant si les signaux de code de discrimination retardé et en cours diffèrent ou non les uns des autres pendant une période de (n) blocs successifs de données reproduits;

un circuit sélecteur (25) connecté pour recevoir les signaux de code de discrimination en cours et ledit signal de commande provenant du compteur (24) et ayant pour fonction de laisser passer les signaux de code de discrimination en cours vers une borne de sortie (Y) quand ledit signal de commande indique que les signaux de code de discrimination retardés et en cours ne diffèrent pas les uns des autres pendant une période de (n) blocs successifs de données;

un second circuit à retard (26) ayant un temps de retard correspondant à un bloc de données, le second circuit à retard (26) étant connecté entre la borne de sortie (Y) et une borne d'entrée (A) du circuit sélecteur (25) et le circuit sélecteur ayant pour fonction de connecter sa borne d'entrée (A) à sa borne de sortie (Y) quand ledit signal de commande provenant du compteur (24) n'indique pas que les signaux de code de discrimination retardés et en cours ne diffèrent pas les uns des autres pendant une période de (n) blocs successifs de données;

un troisième circuit à retard (27) qui retarde les signaux de code de discrimination en cours d'un temps de retard correspondant à (n + 1) blocs de données; et

un second comparateur (28) qui compare les signaux de code de discrimination retardés provenant du troisième circuit à retard (27) avec les signaaux de code de discrimination produits à la borne de sortie (Y) du circuit sélecteur (25) et produisant ledit signal de détection (23) en réponse à ce fait.

7. Appareil selon l'une quelconque des revendications précédentes, dans lequel le générateur de code (8, 9) a pour fonction de produire de façon aléatoire les signaux de code de discrimination (L).

8. Appareil selon la revendication 7, dans lequel le générateur de code (8, 9) comporte un générateur de code aléatoire (28) qui produit un signal avec un nombre prédéterminé de bits et un registre (9) qui reçoit le signal provenant du générateur de codes aléatoires (8) et qui fournit moins que le nombre prédéterminé de bits au dispositif de codage (7).

9. Appareil selon l'une quelconque des revendications précédentes, dans lequel le dispositif d'enregistrement (HR) consiste en un dispositif transducteur (HR) qui enregistre le signal numérique sur la piste du support d'enregistrement magnétique (1).

10. Appareil selon l'une quelconque des revendications précédentes, dans lequel le dispositif de reproduction (HP, etc.) comporte un dispositif transducteur (HP) pour reproduire le signal numérique enregistré sur la piste du support d'enregistrement magnétique (1).

11. Appareil selon l'une quelconque des revendications précédentes, dans lequel le dispositif de reproduction (HP, etc.) comporte un détecteur d'erreur (13) qui détecte un signal de code de correction d'erreur inclus dans chaque bloc de données reproduit et un circuit à retard (15) connecté entre le détecteur d'erreur (13) et le décodeur (16) pour retarder chaque bloc de données provenant du détecteur d'erreur.

12. Appareil d'enregistrement de signaux numériques destiné à enregistrer un nouveau signal numérique sur une piste d'un support d'enregistrement magnétique (1) sur lequel un signal numérique a été précédemment enregistré, le signal numérique précédent étant arrangé en des blocs de données qui comprennent chacun un signal de données et un signal de code de discrimination (L), l'appareil comportant:

un dispositif de reproduction (HP, etc.) qui reproduit les blocs de données du signal numérique précédent, comprenant les signaux de code de discrimination (L), à partir de la piste du support d'enregistrement magnétique, le dispositif de reproduction (HP, etc.) comprenant un décodeur (48) qui produit un signal numérique décodé à partir du signal précédent;

un dispositif d'identification d'erreur (46) ayant pour fonction de contrôler les signaux de code de discrimination reproduits (L) et de produire un signal de détection (61) indiquant une condition d'erreur si les signaux de code de discrimination (L) reproduits à partir de blocs successifs de données ne sont pas conformes à une relation prédéterminée;

le décodeur (48) réagissant audit signal de détection (61) en exécutant une opération de correction d'erreur ou de compensation d'erreur sur le signal numérique précédent reproduit;

un dispositif mélangeur (49) qui reçoit le signal numérique précédent décodé et le nouveau signal numérique et qui produit un signal numérique mélangé;

un codeur (54) qui reçoit le signal numérique mélangé et des signaux correspondant aux signaux de code de discrimination reproduits à partir du signal numérique précédent et qui les arrange en des blocs de données comprenant chacun un signal de données et un signal de code de discrimination; et

un dispositif d'enregistrement (HR) qui enregistre les blocs de données produits par le codeur (54) sur la piste du support d'enregistrement magnétique (1).

13. Appareil selon la revendication 12, comportant un circuit à retard (55) qui retarde les signaux de code de discrimination provenant du dispositif d'identification d'erreur (46) et un dispositif d'addition (56) qui reçoit les signaux de code de discrimination retardés et qui fournit en réponse des nouveaux signaux de code de discrimination pour le codeur (54).

14. Appareil selon la revendication 13, comportant un détecteur d'erreur (45) qui détecte un signal de code de correction d'erreur inclus dans chaque bloc de données reproduit et un autre circuit à retard (47) connecté entre le détecteur d'erreur (45) et le décodeur (48).

15. Appareil selon la revendication 12, la revendication 13 ou la revendication 14 dans lequel le dispositif d'identification d'erreur (46) a pour fonction de fournir ledit signal de détection (61) au décodeur (48) quand le signal de code de discriminatio inclus dans le bloc de données en cours diffère du signal de code de discrimination inclus dans le bloc précédent de données.

16. Appareil selon la revendication 12, la revendication 13 ou la revendication 14, dans lequel le dispositif d'identification d'erreur (46) comporte:

un premier circuit à retard (58) qui retarde le signal de code de discrimination inclus dans chaque bloc de données reproduit d'un retard correspondant à un bloc de données;

un comparateur (59) qui compare chaque signal de code de discrimination retardé avec le signal de code de discrimination en cours et qui produit une impulsion de déclenchement quand les signaux de code de discrimination retardés et en cours diffèrent les uns des autres;

un générateur d'impulsions (60) qui produit ledit signal de détection (61) en réponse à l'impulsion de déclenchement,

un circuit sélecteur (62) connecté pour recevoir les signaux de code de discrimination en cours et ledit signal de détection (61) provenant du générateur d'impulsions; et

un second circuit à retard (63) ayant un temps de retard correspondant à un bloc de données et étant connecté entre une borne de sortie(Y) et une borne d'entrée (A) du circuit sélecteur (62), le circuit sélecteur (62) ayant pour fonction de fournir, à sa borne de sortie (Y): les signaux de code de discrimination précédents produits par le second circuit à retard (63) quand ledit signal de détection (61) provenant du générateur d'impulsions (60) lui est appliqué et pour fournir à tous autres moments, les signaux de code de discrimination en cours.

17. Appareil selon la revendication 16, dans lequel ledit signal de détection (61) produit par ledit générateur d'impulsions (60) a une durée égale à un nombre prédéterminé (n) de blocs de données.

18. Appareil selon la revendication 12, la revendication 13 ou la revendication 14, dans lequel le dispositif d'identification d'erreur (46) comporte:

un premier circuit à retard (58) qui retarde le signal de code de discrimination inclus dans chaque bloc de données reproduit d'un retard correspondant à un bloc de données;

un premier comparateur (59) qui compare chaque signal de code de discrimination retardé avec le signal de code de discrimination en cours et qui produit une impulsion si les signaux de code de discrimination retardés et en cours diffèrent l'un de l'autre;

un compteur (65) qui reçoit les impulsions du premier comparateur (59) et qui produit un signal de commande indiquant si les signaux de code de discrimination retardés et en cours diffèrent ou non l'un de l'autre pendant une période de (n) blocs successifs de données reproduits;

un circuit sélecteur (62) connecté pour recevoir les signaux de code de discrimination en cours et ledit signal de commande provenant du compteur (65) et ayant pour fonction de laisser passer les signaux de code de discrimination en cours vers une borne de sortie (Y) quand ledit signal de commande indique que les signaux de code de discrimination retardés et en cours n'ont pas différé les uns des autres pendant une période de (n) blocs successifs de données;

un second circuit à retard (63) ayant un temps de retard correspondant à un bloc de données, le second circuit à retard (63) étant connecté entre la borne de sortie (Y) et une borne d'entrée (A) du circuit sélecteur (62) et le circuit sélecteur ayant pour fonction de connecter sa borne d'entrée (A) à sa borne de sortie (Y) quand ledit signal de commande provenant du compteur (65) n'indique pas que les signaux de code de discrimination retardés et en cours n'ont pas différé l'un de l'autre pendant une période de (n) blocs successifs de données;

un troisième circuit à retard (66) qui retarde les signaux de code de discrimination en cours d'un temps de retard correspondant à (n + 1) blocs de données; et

un second comparateur (67) qui compare les signaux de code de discrimination retardés provenant du troisiéme circuit à retard (66) avec les signaux de code de discrimination produits à la borne de sortie (Y) du circuit sélecteur (62) et produisant en réponse ledit signal de détection (61).

DA
2
1
3
DB
DA
DB
2
1
DB
4
DA
4
DB
ONE BLOCK
3
1
HB
ERROR CORRECTION CODE
CRC CODE
SYNC
L
BA
PCM DATA
ONE BLOCK

FIG.1A

FIG.1B

FIG.1C

FIG.2

FIG.3

F I G.4

A/D CONVERTER
ENCODER
A
LATCH
RANDOM CODE GEN.
5
6
7
8
9
10
11
HR

F I G.5

A
CRC ERROR DETECTOR
DELAY CKT
DECODER
D/A CONVERTER
DETECTOR
HP
12
13
14
15
16
17
18
14
19
20
COMPARATOR
MONO MULTI.
DELAY CKT
21
22
23

F I G.7

F I G.8

14
19
COMPARATOR
COUNTER
B
S SELECTOR Y
A
20
DELAY CKT
21
24
25
DELAY CKT
26
DELAY CKT (n+1)
COMPARATOR
27
28
23

FIG.6A
$L_4$
$L_2$
N BLOCKS
$L_3$
$L_1$
$L_4$
FIG.6B
$L_2$ $L_2$
REC. ON
$L_2$
$L_2$
REC. OFF
FIG.9A
$L_1$
$T_1$
$L_2$ $L_2$
$T_2$
$L_1$
$T_3$
$L_1$
$L_4$
FIG.9B
FIG.9C
n BLOCKS
n BLOCKS
FIG.9D
$L_1$
$L_1$
$L_4$
$T_4$
FIG.9E
$L_1$
n+1 BLOCKS
$L_2$ $L_2$
$L_1$
$L_4$
FIG.9F

# F I G.10

1
A
HP
HR
CRC CHECKER
DELAY CKT
DECODER
CROSS FADER
ENCODER
48
49
54
45
47
51
A/D CONVERTER
D/A CONVERTER
53
46
55
50
56
52
DETECTOR & PROTECTOR
DELAY CKT
ADDER

# F I G.11

62
57
64
46
COMPARATOR
MONO MULTI.
S SELECTOR Y
A
B
58
DELAY CKT
59
60
61
DELAY CKT
63

# F I G.13

62
57
64
46
COMPARATOR
COUNTER
S SELECTOR Y
B
A
58
DELAY CKT
59
65
66
DELAY CKT
63
61
DELAY CKT (n+1)
COMPARATOR
67

T1
T2
T3
T4
L1
L1
L2
L2
L2
L2
L2
L3
L3
n BLOCKS
n BLOCKS

FIG.12A
FIG.12B
FIG.12C
FIG.12D

L2
L1
L1
L2
L3
T1
T2
T3
n BLOCKS
n BLOCKS
L3
T5
n+1 BLOCKS
FIG.14A
FIG.14B
FIG.14C
FIG.14D
FIG.14E
FIG.14F